# EUROPEAN PATENT SPECIFICATION

(11) **EP 3 699 687 B1**
(45) Date of publication and mention of the grant of the patent: **23.03.2022**
(21) Application number: 18898066.8
(22) Date of filing: 05.01.2018
(51) Int. Cl.: G03B 17/56, F16M 11/04, H01M 50/10

(54) **HANDLE BATTERY, HANDLE BATTERY KIT AND HAND-HELD GIMBAL**
HANDGRIFFBATTERIE, HANDGRIFFBATTERIESATZ UND TRAGBARES SCHWEBESTATIV
BATTERIE DE POIGNÉE, KIT DE BATTERIE DE POIGNÉE ET SUSPENSION À CARDAN PORTATIVE

(43) Date of publication of application: 26.08.2020
(73) Proprietor: SZ DJI Technology Co., Ltd., Shenzhen, Guangdong 518057 (CN)
(72) Inventor: ZHU, Zhihui, Shenzhen, Guangdong 518057 (CN); LI, Peng, Shenzhen, Guangdong 518057 (CN); BEI, Shimeng, Shenzhen, Guangdong 518057 (CN); TIAN, Xiaoyu, Shenzhen, Guangdong 518057 (CN)
(74) Representative: Goddar, Heinz J.
(86) International application number: PCT/CN2018/071622
(87) International publication number: WO 2019/134131

(56) References cited:
- WO-A1-2017/116919
- CN-A- 107 120 499
- CN-A- 107 466 379
- CN-U- 205 017 429
- CN-U- 206 349 432
- CN-U- 206 582 509
- US-A1- 2010 259 671

## Description

### TECHNICAL FIELD

The present disclosure relates to a handle battery, a handle battery set, and a handheld gimbal, and belongs to the technical field of handheld movable photographing device.

### BACKGROUND

A handheld gimbal is small in size and convenient to carry. It can be equipped with a small photographing device, such as a video camera, a camera, a smartphone, etc., and can reach the goal of quickly stabilizing a photographing device when shooting while moving, so as to achieve a good shooting effect. However, the existing handheld gimbal often runs out of power during use in some occasions. For a rechargeable handheld gimbal, a shooting job is stopped at that time, the handheld gimbal is sent as a whole for charging, and the shooting is resumed only after the handheld gimbal is charged, which is very inconvenient. For a battery-powered handheld gimbal, the battery needs to be replaced frequently, which not only increases an extra cost for a photographer, but also causes certain pollution problems. Relevant prior art documents are WO 2017/116919 and CN 205 017 429 U.

### SUMMARY

The present invention provides a handle battery, a handle battery set, and a handheld gimbal to solve the problem of inconvenient battery use for the existing handheld gimbals.

According to embodiments of the present invention, a handle battery is provided. The handle battery includes a casing, an upper cover, and a lower cover. The casing has an upper-end opening, a lower-end opening, and a receiving cavity located between the upper-end opening and the lower-end opening. The receiving cavity houses a battery cell configured for supplying power to a gimbal. The upper cover covers the upper-end opening and has a mounting groove configured for detachable connection with the gimbal. The mounting groove has an entrance for the gimbal to enter the mounting groove, a first surface opposite to the entrance, a first guide groove and a second guide groove that are opposite to each other and located between the entrance and the first surface, and a bottom surface below the entrance, the first surface, the first guide groove, and the second guide groove. In addition, a power supply interface for powering the gimbal is configured in the mounting groove. The lower cover covers the lower-end opening.

According to embodiments of the present invention, a handle battery set is provided that includes a handle battery and a charging base. The handle battery includes a casing, an upper cover, and a lower cover. The casing has an upper-end opening, a lower-end opening, and a receiving cavity located between the upper-end opening and the lower-end opening. The receiving cavity houses a battery cell configured for supplying power to a gimbal. The upper cover covers the upper-end opening and has a mounting groove configured for detachable connection with the gimbal. The mounting groove has an entrance for the gimbal to enter the mounting groove, a first surface opposite to the entrance, a first guide groove and a second guide groove that are opposite to each other and located between the entrance and the first surface, and a bottom surface below the entrance, the first surface, the first guide groove, and the second guide groove. In addition, a power supply interface for powering the gimbal is configured in the mounting groove. The lower cover covers the lower-end opening. The charging base is configured to be detachably snapped into the mounting groove. A surface of the charging base in contact with the power supply interface of the handle battery includes a charging interface, which matches the power supply interface to charge the handle battery.

According to embodiments of the present invention, a handheld gimbal is provided that includes a handle battery and a base gimbal. The handle battery includes a casing, an upper cover, and a lower cover. The casing has an upper-end opening, a lower-end opening, and a receiving cavity located between the upper-end opening and the lower-end opening. The receiving cavity houses a battery cell configured for supplying power to the base gimbal. The upper cover covers the upper-end opening and has a mounting groove configured for detachable connection with the base gimbal. The mounting groove has an entrance for the base gimbal to enter the mounting groove, a first surface opposite to the entrance, a first guide groove and a second guide groove that are opposite to each other and located between the entrance and the first surface, and a bottom surface below the entrance, the first surface, the first guide groove, and the second guide groove. In addition, a power supply interface for powering the base gimbal is configured in the mounting groove. The lower cover covers the lower-end opening. The base gimbal is configured to be detachably snapped into the mounting groove.

According to technical solutions of embodiments of the present invention, by forming a mounting groove on an upper cover of a handle battery, a gimbal may be detachably installed in the mounting groove. When the power of the handle battery is used up, it may be removed and replaced with a spare handle battery to continue photographing. The handle battery just used may be charged to replace the spare handle battery. That is, with technical solutions of embodiments of the present invention, the purpose of continuous photographing is achieved by replacing between a main handle battery and a spare handle battery.

Advantages of additional aspects of the present invention will be given in part in the following description, part of which will become apparent from the following description, or be learned through the practice of the present invention.

### BRIEF DESCRIPTION OF THE DRAWINGS

The above and other objects, features, and advantages of embodiments of the present invention will become easier to understand by referring to the following detailed description with reference to the accompanying drawings. In the drawings, various embodiments of the invention will be described by way of examples and non-limiting manners.
FIG. 1 illustrates a schematic structural diagram of a handle battery according to exemplary embodiments of the present invention;
FIG. 2 is an enlarged view of an upper cover in FIG. 1;
FIG. 3 is a rear view of the handle battery in FIG. 1;
FIG. 4 is a right side view of the handle battery in FIG. 1;
FIG. 5 is an exploded view of the handle battery in FIG. 1;
FIG. 6 is an exploded view of a protection box and its internal structure according to another exemplary embodiment of the present invention;
FIG. 7 illustrates a schematic structural diagram of a handle battery set according to exemplary embodiments of the present invention;
FIG. 8 is an exploded view of the handle battery set in FIG. 7;
FIG. 9 illustrates a schematic structural diagram of a charging base in FIG. 7; and
FIGs. 10-12 are exploded views of a handheld gimbal provided in different perspectives according to exemplary embodiments of the present invention.

**REFERENCE NUMERALS IN DRAWINGS**

| | | | | | |
|---|---|---|---|---|---|
| 1 | Handle battery | 11 | Upper cover | 111 | Top end |
| 112 | Bottom end | 113 | Mounting groove | 113a | Entrance |
| 113b | Rear end surface | 113c | Left guide groove | 113d | Right guide groove |
| 113e | Bottom surface | 114 | Guide slope | 115 | Guide rail |
| 116 | Upper rubber sleeve | 12 | Main body | 1211 | First casing |
| 1211a | Protective colloid layer | 1212 | Second casing | 1221 | First housing |
| 1222 | Second housing | 1223 | Recess | 1224 | Locking recess |
| 123 | Bolt | 13 | Lower cover | 14 | Contact board |
| 141 | Power supply interface | 141a | Positive contact | 141b | Negative contact |
| 142 | Communication contact | 15 | Protection board | 16 | battery cell |
| 171 | Control circuit board | 172 | Remaining power indicator | 173 | Control button |
| 181 | Connection line | 182 | Nickel sheet | 183 | DuPont paper |
| 19 | Bottom rubber pad | 2 | Charging base | 21a | Rear surface |
| 21b | Front surface | 21c | Left side | 21d | Right side |
| 21e | Top surface | 221 | Plug | 222 | First USB interface |
| 23 | Second USB interface | 3 | Gimbal | 31 | Control section |
| 311a | Left convex rib | 311b | Right convex rib | 312 | Connection plate |
| 313 | Control knob | 32 | Three-axis stabilization system | | |
| 33 | Camera mounting bracket | | | | |

### DETAILED DESCRIPTION OF THE EMBODIMENTS

Embodiments of the present invention are described in detail below. Examples of the embodiments are shown in the drawings, where the same or similar reference numerals throughout the disclosure indicate the same or similar elements or elements having the same or similar functions. Embodiments described below with reference to the drawings are exemplary and are intended to explain the present invention, but should not be construed as limiting the present invention.

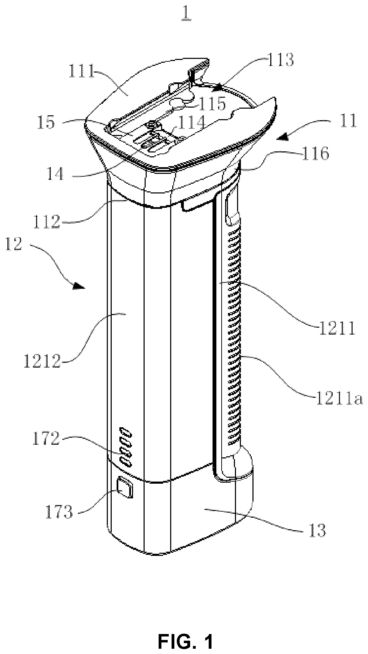

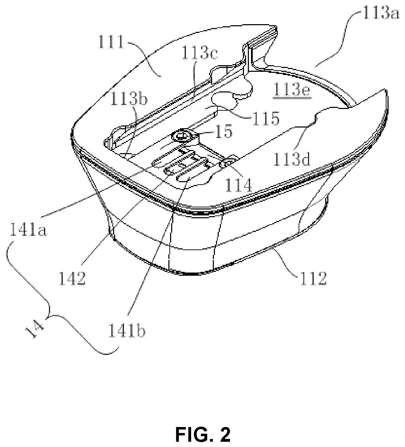

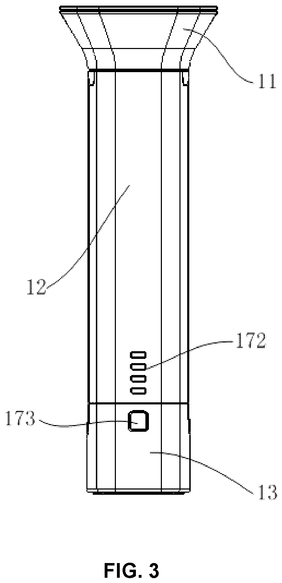

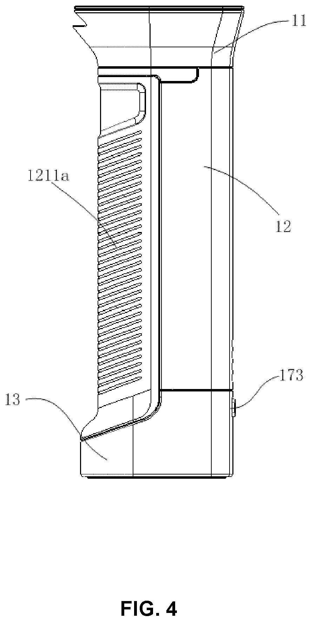

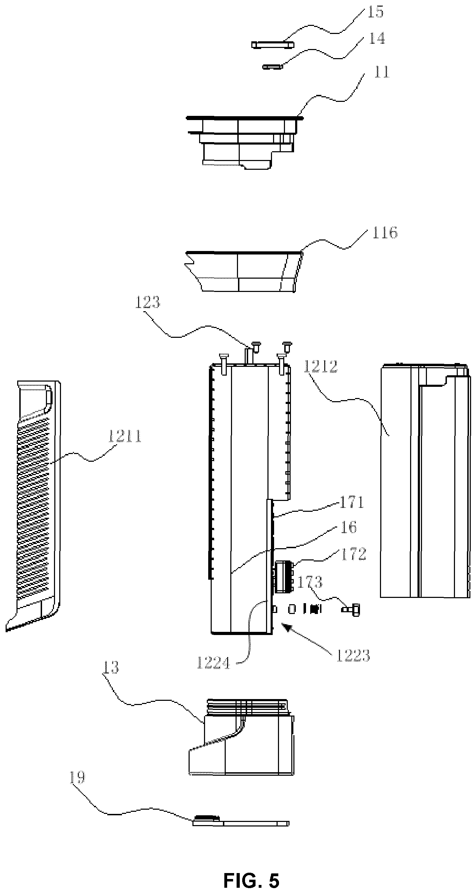

FIG. 1 is a schematic structural diagram of a handle battery 1 provided in embodiments of the present invention. FIG. 2 is an enlarged view of an upper cover of the handle battery in FIG. 1. FIG. 3 is a rear view of the handle battery in FIG. 1. FIG. 4 is a right side view of the handle battery in FIG. 1. FIG. 5 is an exploded view of the handle battery in FIG. 1.

As shown in FIGs. 1-5, the handle battery 1 includes an upper cover 11, a main body 12, a battery cell 16 installed in the main body portion 12, and a lower cover 13. A top end 111 of the upper cover 11 is detachably connected to a gimbal, a bottom end 112 of the upper cover 11 is fixed to the top end of the main body 12, and the bottom of the main body 12 is fixed to the lower cover 13. In order to enable those skilled in the art to understand the technical solutions of this disclosure more clearly, structures of components of the handle battery 1 are described below in the sequence of the upper cover 11, the main body 12, and the lower cover 13.

Continuing with reference to FIGs. 1-5, the upper cover 11 is solid or the upper half is a solid columnar structure. The cross section of the top end 111 includes a rectangular portion on the left and a roughly semi-elliptical portion on the right. When only the upper half of the upper cover 11 is solid, the cross-section of the bottom end 112 includes a semi-closed rectangular portion on the left and a semi-closed arc portion on the right. The front and back ends of the semi-closed arc are connected to the front and back ends of the semi-closed rectangular portion. It should be understood that, in some embodiments, a cross-section of the upper cover 11 may be oval, rectangular, or any other suitable geometric shape, and in some other embodiments, a cross section of the top end 111 of the upper cover 11 and a cross-section of the bottom end 112 may also be different.

Optionally, the upper cover 11 is configured as shown in FIG. 1 and FIG. 2 with a large top end 111 and a small bottom end 112 to increase the connection area between a gimbal and the handle battery 1, thereby enhancing the connection strength between the two, and reducing the volume of the handle battery 1 to reduce the weight of the handle battery 1. Optionally, in some other embodiments, the upper cover 11 may also have a structure that is substantially the same size from the top end 111 to the bottom end 112, such as an oval column with the same size on the top and bottom for reducing the mold making cost.

A mounting groove 113 is provided on the top end 111 of the upper cover 11 or the middle part between the top end 111 and the bottom end 112 for snap connection with a gimbal. Optionally, as described below, the mounting groove 113 may also be used for snap connection with a charging base for charging the handle battery 1 or use the handle battery 1 to supply power to an external device connected to the charging base. The mounting groove 113 may have any shape, such as a dovetail groove (as shown in FIGs. 1 and 2), a circular groove, or an oval groove.

Specifically, the mounting groove 113 is viewed from the perspective of FIG. 1 and FIG. 2, and includes an entrance 113a for the bottom end of a gimbal or a charging base to enter, a rear end surface 113b opposite the entrance 113a, a left guide groove 113c located between the entrance 113a and the rear end surface 113b, a right guide groove 113d located between the entrance 113a and the rear end surface 113b and opposite the left guide groove 113c, and a bottom surface 113e below the entrance 113a, the rear end surface 113b, the left guide groove 113c, and the right guide groove 113d. It may be understood that terms "front", "rear", "left", "right", "top", and "bottom" used herein are directed to the directions in the drawings and are not a limitation on the present invention.

A power supply interface 141 configured for powering a gimbal is arranged in the mounting groove 113, and the power supply interface 141 may be any one of a contact-type interface, a spring pin interface, a slot interface, and a plug-in interface. The followings use the contact-type interface installed in the dovetail groove in FIG. 1 as an example to introduce specific structures and setting methods of the power supply interface 141 in detail. Those skilled in the art may directly or after simple replacement replace the following contact-type interface with any of the spring pin interface, slot interface, and plug-in interface.

As shown in FIGs. 1 and 2, a contact board 14 is provided at a position of the dovetail groove near the rear end surface 113b. The contact board 14 is provided with a positive contact 141a and a negative contact 141b for supplying power to a gimbal. The positive and negative contacts are electrically connected to the battery cell 16 in the main body 12 through a connection line 181 that passes through the upper cover 11. In some embodiments, the contact board 14 may include a positive contact plate provided with a positive contact 141a, and a negative contact plate provided with a negative contact 141b. Specifically, during manufacturing, the contact board 14 may be fixed on the bottom surface 113e of the dovetail groove by means of bolts or screws, or the contact board 14 may be fixed on the bottom surface 113e of the dovetail groove by means of bonding, welding, or fitting, which may improve reliability of connection between the positive contact 141a and the negative contact 141b on the contact board 14 and the connection line 181, and avoid the failure of electrical connection between the contact interface and the battery cell 16. For example, in some embodiments, the contact board 14 and the upper cover 11 may be formed as a single piece by injection molding, thereby achieving the purpose of embedding the positive contact 141a and the negative contact 141b on the bottom surface 113e.

Optionally, as shown in FIGs. 1 and 2, the contact board 14 is provided protruding from the bottom surface 113e of the dovetail groove. Between the contact board 14 and the bottom surface 113e of the dovetail groove, a guide slope 114 extending toward the entrance 113a of the dovetail groove is provided. The guide slope 114 guides when a gimbal or a charging base is installed in the dovetail groove, so that the positive contact 141a and the negative contact 141b on the contact board 14 may be brought into contact with the negative contact and the positive contact at the bottom of the gimbal or the charging base, so as to achieve the purpose of electrical connection.

Alternatively, on the left and right sides of the bottom surface 113e of the dovetail groove, guide rails 115 is provided for guiding when a gimbal or a charging base is installed. The guide rails 115 protrude from the bottom surface 113e of the dovetail groove. By providing the guide rails 115, it not only makes it convenient to install a gimbal or a charging base, but also prevents direct contact between the bottom surface of a gimbal or charging base and the bottom surface 113e of the dovetail groove in the initial stage of installation. Especially when the positive contact 141a and the negative contact 141b are provided on the bottom surface 113e of the dovetail groove, it may prevent the positive contact 141a and negative contact 141b on the contact board 14 from excessive friction with the bottom surface of a gimbal or a charging base, thereby avoiding damage.

In addition, in order to lock the handle battery 1 with a gimbal or charging base after the gimbal or charging base is installed in place, the guide rails or the inner walls of the dovetail groove (such as the left guide groove 113c, the right guide groove 113d, or the rear end surface 113b) are also provided with a connection slot or a connection hook that matches the gimbal or charging base. Under the guidance of the guide slope 114, the gimbal or charging base slides obliquely upward when being installed in the dovetail groove, causing the connection slot or connection hook in the dovetail groove to engage with the connection hook or connection slot on the gimbal or charging base. As such, the gimbal or charging base is locked with the handle battery 1.

Further, a protection board 15 is configured in the dovetail groove. The protection board 15 is provided with a through hole, and the contact board 14 is installed in the through hole. During assembly, the protection board 15 may be fixed to the bottom surface 113e of the mounting groove 113 by means of bolts or screws, or it may also be fixed to the bottom surface 113e of the mounting groove 113 by means of adhesion or fitting. By providing the above-mentioned protection board 15, the contact board 14 may be protected to a certain extent.

It should be noted that in some embodiments, it is not limited to that the positive contact 141a and the negative contact 141b are provided on the bottom surface 113e of the dovetail groove, and the positive contact 141a and the negative contact 141b may also be provided on the rear end surface 113b of the dovetail groove. For example, the contact board 14 and the protection board 15 may be fixed on the rear end surface 113b of the dovetail groove. As such, a gimbal and a charging base only need to have matching contacts that may connect with the positive contact 141a and the negative contact 141b on the rear end surface 113b of the dovetail groove.

Further, a communication interface is also installed in the dovetail groove, and the communication interface is configured to connect a control circuit board 171 to be described below with a gimbal communicatively. Similar to the power supply interface 141, the communication interface may also be any of a contact-type interface, a spring pin interface, a slot interface, and a plug-in interface. Take the contact-type interface of the communication interface in the dovetail groove as shown in FIGs. 1 and 2 as an example. A communication contact 142 of the contact-type interface is communicatively connected to the control circuit board 171 through the connection line 181 that passes through the upper cover 11. In an exemplary setting, the communication contact 142 may be provided on any surface of the dovetail groove, such as on the bottom surface 113e or the rear end surface 113b.

Optionally, the communication contact 142 is integrated with the positive contact 141a and negative contact 141b. For example, the communication contact 142 may also be provided on the above-mentioned contact board 14 to reduce area of the connection points, thereby improving the stability of electric current and signal transmission. In order to lower the risk of short circuit of the power supply interface 141, the communication contact 142 may be configured between the positive contact 141a and the negative contact 141b.

Further, referring to FIGs. 1, 4, and, 5, in order to improve the grip comfort and insulation, the outer surface of the upper cover 11 may be wrapped with an upper rubber sleeve 116. As such, when a user holds the upper cover 11 by hand, a partial elastic deformation may be generated to adapt to the shape of the palm, and when the handle battery 1 falls, the upper rubber sleeve 116 may protect the upper cover 11, the contact board 12, and the protection board 15.

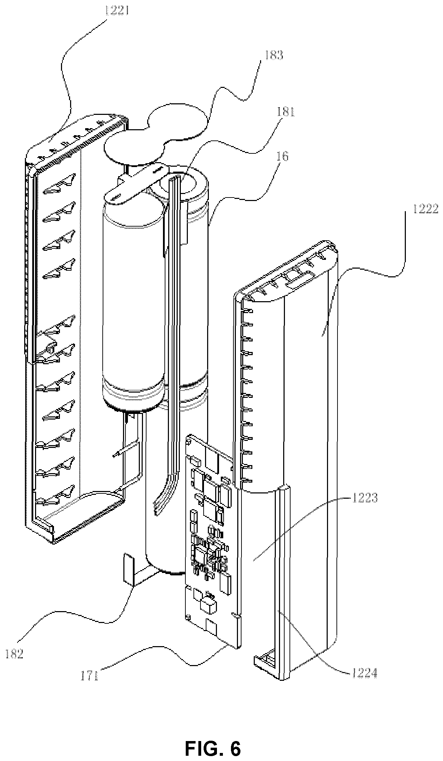

FIG. 6 is an exploded view of a protection box and its internal structure. Referring to FIGs. 5 and 6, the main body 12 includes a casing, a protection box accommodated in a receiving cavity, a control circuit board 171 held in the casing, and the connection line 181. The battery cell 16 is housed in the protection box, and electrically connected to the control circuit board 171 and the power supply interface 141 through the connection line 181.

The casing is a hollow cylindrical structure, which has an upper-end opening, a lower-end opening, and a receiving cavity between the upper-end opening and the lower-end opening configured for housing the battery cell 16 and the protection box. The cross section of the casing may be round, oval, rectangular, or irregular shapes.

Optionally, in order to facilitate the installation of the protection box in the receiving cavity, the casing may include a first casing 1211 and a second casing 1212 snapped together as shown in FIG. 5. The first casing 1211 is an arc-shaped plate with a notch at the rear end, the second casing 1212 is a rectangular plate with a notch at the front, and there is smooth transition between the first casing 1211 and second casing 1212. Based on aforementioned structure of the casing, the first casing 1211 is configured as an arc-shaped plate with a notch at the rear end, so that the outer surface of the first casing 1211 may be matched with the shape of a palm, thereby improving the grip of the palm on the handle battery 1.

Further, a protective colloid layer 1211a may also be fixed on the outer surface of the first casing 1211 by means of bonding, bolting, or interference connection, so as to facilitate a user's grasp. Furthermore, the protective colloid layer 1211a is elastic, so that when a user grasps the first casing 1211 by hand, the protective colloid layer 1211a may elastically deform under the action of the holding force to adapt to the shape of a palm, thereby enhancing the friction between the casing and a hand to prevent it from falling. Still further, multiple non-slip lines may be provided on the outer surface of the protective colloid layer 1211a, as shown in FIGs. 1, 4, and 6, thereby increasing the frictional force during holding the handle battery 1 and preventing it from falling off.

The second casing 1212 is provided with a mounting hole for a remaining power indicator 172 at a position near the bottom end, and the remaining power indicator 172 is installed in the mounting hole. The remaining power indicator 172 is electrically connected to the control circuit board 171 and a control button 173 to be described later, to indicate the remaining electrical power of the battery cell 16 in an assembly of the battery cell 16. The remaining power indicator 172 may be a light-emitting diode (LED) lamp or an incandescent lamp. It should be understood that the remaining power indicator 172 is not limited to be installed at the position near the bottom end of the second casing 1212, and may be installed at any position on the second casing 1212 or the first casing 1211 in some other embodiments.

With continued reference to FIG. 6, the protection box may be a closed or semi-closed box. In some embodiments, it is an integrated structure made by injection molding process, heat shrinking process, or other forming methods. For example, one or more battery cells 16 may be connected to the connection line 181 and then placed in a mold, and then an integrated protection box is formed by injection molding, or the connected battery cells 16 and the connection line 181 are placed in plastic film, and then form an integrated protection box by heat shrinking. In other embodiments, the protection box may also have a split structure. A structure of the protection box will be described below with the basically closed box shown in FIG. 6 as an example.

Referring to FIG. 6, the protection box includes a first housing 1221 and a second housing 1222 which are snapped together, so that one or more battery cells 16, the control circuit board 171, and the connection line 181 may be easily mounted in the cavity of the protection box. Specifically, the first housing 1221 and the second housing 1222 may be snapped together by means of snap-fitting, or may be fixedly connected together by bolts 123, adhesive, or other fixing methods.

The battery cell 16 is accommodated in the cavity of the protection box, and is electrically connected to the control circuit board 171 and the power supply interface 141 of the upper cover 11 through the connection line 181. In one embodiment, the battery cell 16 may be one or more cells. When there are multiple battery cells 16, each cell 16 may be arranged horizontally or vertically, or two or more cells 16 may be connected in series and into a group first, and then multiple groups of cells 16 may be arranged horizontally or vertically. The positive electrode or negative electrode located at the top end and the negative electrode or positive electrode located at the bottom end are welded to nickel sheets 182 so as to be electrically connected to the positive contact 141a and the negative contact 141b on the upper cover 11 respectively through the connection line 181, and be connected to the control circuit board 171 to supply power to the control circuit board 171. DuPont paper 183 is provided on the negative electrode of the battery cell 16 to avoid short circuit of the battery cell 16.

Optionally, first buckles are formed on an inner surface of the protection box, as shown in FIG. 6. A first buckle on the left side is engaged with the nickel sheet 182 on the left side by snap connection, the nickel sheet 182 is welded to the positive electrode of the battery cell 16, and a first buckle on the right side is engaged with the nickel sheet 182 on the right side. The nickel sheet 182 on the right side is welded to the negative electrode of the battery cell 16.

The protection box and the casing are fixed together by bolts 123. In some other embodiments, second buckles are formed on the outer surface of the protection box and the inner surface of the casing, so that the protection box and the casing may be snapped together to further fix the protection box and the casing to avoid shaking of the protection box inside the casing.

Alternatively, a recess 1223 is provided on a portion of the protection box near the bottom end and a locking recess 1224 is provided in the recess 1223. The control circuit board 171 is then snapped into the locking recess 1224, and connected to the positive and negative electrodes of the battery cell 16 through the connection line 181, and connected to the communication contact 142 of the upper cover 11.

The control circuit board 171 is designed with a module or a circuit for obtaining parameters of the battery cell 16 such as the remaining electrical power, temperature, input electrical voltage, output electrical voltage, input electric current, and output electric current of the battery cell 16. When multiple battery cells 16 (hereinafter referred to as a battery cell 16 group) are contained in the cavity of the protection box, the control circuit board 171 is also used to obtain the ratio of the remaining electrical power of each battery cell 16 to the total remaining power to balance the power of each battery cell 16 in the battery cell group, thereby avoiding excessive discharge of power of one or more battery cells 16 in a battery cell 16 group, and achieving the purpose of balancing the power of the battery cells 16. In one embodiment, the control circuit board 171 may control the charging and/or discharging process of one battery cell 16 or a battery cell 16 group according to one or more of the above-mentioned parameters. For example, when a battery cell 16 group is installed in the protection box, and the ratio of the remaining power of one of the battery cells 16 to the total remaining power is higher than an average value during a discharge process, the control circuit board 171 controls the battery cell 16 and causes it to discharge first. When charging, if the ratio of the remaining power of one of the battery cells 16 to the total remaining power is smaller than an average value, the control circuit board 171 controls to charge the battery cell 16 first. For another example, when a single battery cell 16 is installed in the protection box, if the temperature of the battery cell 16 is higher than a threshold value during charging, the charging may be temporarily stopped or the charging current is reduced to protect the battery cell 16.

In addition, through the connection line 181, the control circuit board 171 also forms a circuit loop with the control button 173 to be described below, the remaining power indicator 172, and the battery cell 16. Hence, when the control button 173 is pressed, the circuit loop may be turned on, so that the control circuit board 171 may control the remaining power indicator 172 to light according to a preset rule to indicate the remaining power of the battery cell 16 that the control circuit board 171 obtains. Optionally, as shown in FIG. 4, the remaining power indicator 172 and the control button 173 may also be directly soldered to the control circuit board 171 and electrically connected through the connection line 181 formed on the control circuit board 171.

In a specific way of controlling the remaining power indicator 172 to display the remaining power of the battery cell 16, the remaining power of the battery cell 16 may be indicated by the brightness or color change of the remaining power indicator 172, or be indicated by the number of lamp beads of the remaining power indicator 172 that are lit. That is, the remaining power indicator 172 may have multiple lamp beads.

Further, when the remaining power indicator 172 is turned on for a period of time, the remaining power indicator 172 is controlled to automatically turn off to save power of the battery cell 16. Specifically, a certain timing circuit may be set on the control circuit board 171. When the control button 173 is pressed, the remaining power indicator 172 is lit and the timing circuit starts timing. When the timing circuit reaches a preset time, the control circuit board 171 generates a control signal to turn off the remaining power indicator 172. It should be understood that the function of the timing circuit described above may also be implemented by an executable program stored in the memory of the control circuit board 171.

Hence, the control circuit board 171 is provided in the battery cell 16 assembly, and the control circuit board 171, the battery cell 16, the control button 173, and the remaining power indicator 172 form a circuit loop. When the control button 173 is pressed, the remaining power of the battery cell 16 obtained by the control circuit board 171 is indicated by the remaining power indicator 172. Moreover, the control circuit board 171 may also be configured to control the remaining power indicator 172 to automatically turn it off after a period of time to save the power of the battery cell 16. Optionally, as described above, the control circuit board 171 may also be configured to control a charging or discharging process of the battery cell 16 or the battery cell 16 group using an obtained parameter of the battery cell 16 or the battery cell 16 group.

In addition, although the main body 12 in the above embodiments includes a casing and a protection box inside the casing, in some other embodiments, the protection box may not be provided, and the battery cell 16 or the battery cell 16 group may be directly installed in the receiving cavity of the casing to reduce the number of structural components, thereby reducing the weight and cost of the handle battery 1. Specifically, when the casing is made of a non-insulating material, an insulation effect may be achieved by providing a protection box in the casing, thereby improving the safety of the handle battery 1; but when the casing is made of an insulating material, it may not be needed to arrange a protection box to improve insulation protection capability.

Continuing to refer to FIGs. 1 to 5, the lower cover 13 is a columnar structure, which covers the lower-end opening of the casing. For example, the lower cover 13 may be fixed at the lower-end opening by means of a snap connection, an interference connection, and so on. The cross section of the lower cover 13 matches the cross-sectional shape of the lower end of the main body 12, so that when the lower cover 13 covers the lower end of the main body 12, the lower cover 13 covers the opening of the lower end of the main body 12, thereby forming the receiving cavity configured to accommodate the battery cell 16 and the protection box.

Specifically, referring to FIG. 5, the lower cover 13 includes an upper opening, a bottom end opposite to the upper opening, and a side wall located between the upper opening and the bottom end. The side wall includes a front side wall, a rear side wall opposite to the front side wall, a left side wall connected to the left sides of the front and rear side walls, and a right side wall connected to the right sides of the front and rear walls. Optionally, the front side wall has a curved surface, the rear side wall, the left side wall, and the right side wall have a flat surface, and the left side wall and the right side wall smoothly transition to the front side wall.

Optionally, an external thread is provided at a position of the side wall near the top end, which is used to cooperate with an internal thread provided in the lower-end opening of the casing, so as to achieve the purpose of mounting the lower cover 13 on the main body 12. In some other embodiments, an internal thread may also be provided at a position of the side wall near the top end and inside the upper opening, which is used to cooperate with the external thread provided at the lower end of the casing to mount the lower cover 13 on the main body 12.

Alternatively, a control button mounting hole is provided on the rear side wall, and the above-mentioned control button 173 for controlling the remaining power indicator 172 is installed in the control button mounting hole and electrically connected to the control circuit board 171 in the main body 12. It should be understood that the control button 173 may also be disposed on the front side wall, the left side wall, or the right side wall of the lower cover 13, and in some other embodiments, the control button 173 may not be disposed on the lower cover 13.

Optionally, a quarter screw hole (not shown in the figure) is provided at the bottom of the lower cover 13 configured for connecting with a tripod or other fixing device.

Further, a bottom rubber pad 19 is fixed to the bottom of the lower cover 13 by means of bonding, interference fit, or other connection methods, so as to protect the lower cover 13 and prevent the lower cover 13 from being damaged when the handle battery 1 is dropped vertically.

According to handle batteries of embodiments of the present invention, by forming a mounting groove on an upper cover of a handle battery, a gimbal may be detachably installed in the mounting groove. When power of the handle battery is used up, it may be removed and replaced with a spare handle battery for continuing photographing. A handle battery just used may be charged to replace the spare handle battery. That is, with technical solutions of embodiments of the present invention, the purpose of continuous photographing may be achieved by replacing between a main handle battery and a spare handle battery.

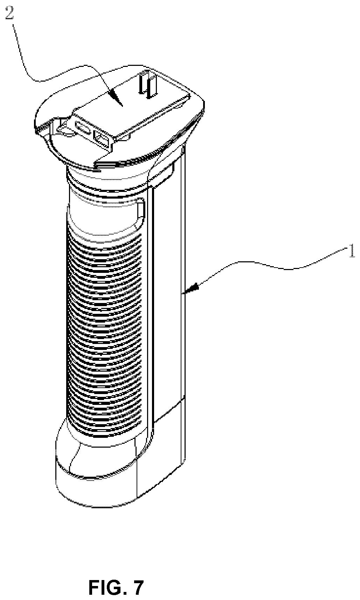

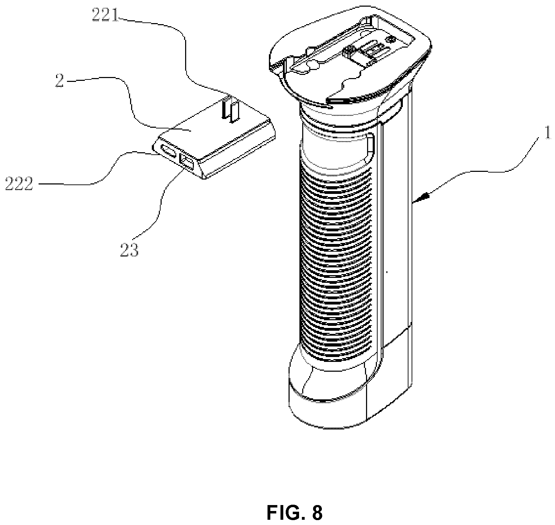

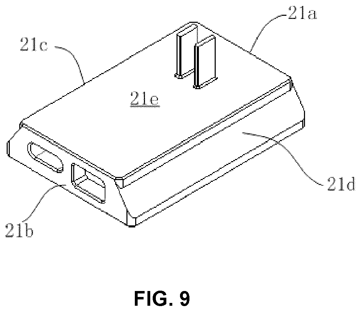

FIG. 7 is a schematic structural diagram of a handle battery set provided in embodiments of the present invention. FIG. 8 is an exploded view of FIG. 7, and FIG. 9 is a schematic structural diagram of a charging base. As shown in FIGs. 7-9, the handle battery 1 described in the above embodiments may further include a charging base 2, and the charging base 2 is configured to be snapped into the mounting groove 113 arranged on the upper cover 11 of the handle battery 1.

Assuming that the mounting groove 113 configured on the upper cover 11 of the handle battery 1 is a dovetail groove, the shape of the left side 21c and the right side 21d of the charging base 2 matches the shape of the dovetail groove. It should be understood that when the mounting groove 113 has other shapes, the shape of the charging base 2 may be changed accordingly to achieve the snap connection with the mounting groove 113.

The bottom surface of the charging base 2 is provided with an electrical connection interface electrically connected to the positive contact 141a and the negative contact 141b on the contact board 14. A charging interface configured for charging the handle battery 1 is also provided on a top surface 21e and/or a front surface 21b of the charging base 2. For example, FIGs. 8 and 9 show a plug 221 provided on a top surface 21e of the charging base 2 for charging the handle battery 1, and a first USB interface 222 provided on the front surface 21b of the charging base 2 for charging the handle battery 1. Optionally, in some embodiments, only one of the charging interfaces may be provided, and positions of the plug 221 and the first USB interface 222 may be interchanged, that is, the plug 221 may be provided on the front surface 21b and the first USB interface 222 may be arranged on the top surface 21e.

In addition, the charging base 2 is also provided with a discharge interface configured for electrically connecting with an external device to supply power to the external device through the handle battery 1. For example, FIG. 8 and FIG. 9 show that the front surface 21b of the charging base 2 is provided with a second USB interface 23 for supplying power to an external device. Optionally, in some other embodiments, the second USB interface 23 may also be provided on the top surface 21e of the charging base 2.

According to handle battery sets of embodiments of the present invention, by forming a mounting groove on an upper cover of a handle battery, a charging base may be detachably installed in the mounting groove to charge a handle battery. Further, by setting multiple different types of charging interfaces, different types of power sources may be used to charge a handle battery. For example, the plug and the first USB interface may be set such that a socket or a mobile power source may be used to charge a handle battery. In addition, by setting a second USB interface, power of a handle battery may be supplied to an external device, that is, the handle battery may be used as a mobile power source, so that it may supply power for a mobile phone or a tablet computer.

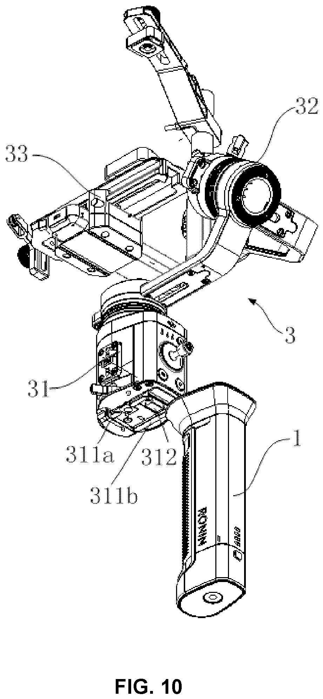

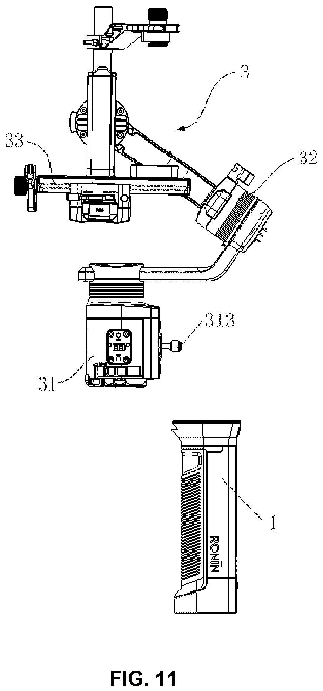

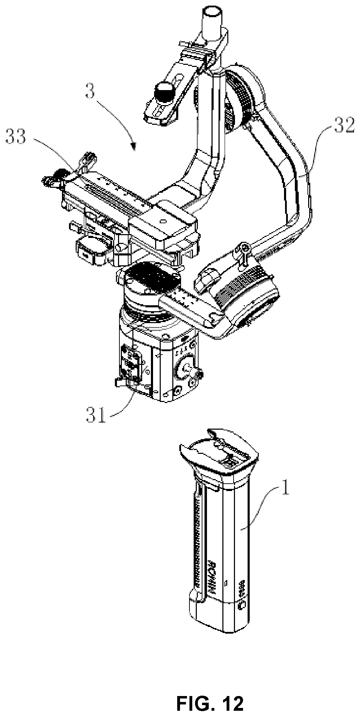

FIGs. 10-12 are exploded views of a handheld gimbal provided in embodiments from different perspectives. Referring to FIGs. 10-12, the embodiments also provide a handheld gimbal, which includes the handle battery 1 described above and a gimbal 3. The bottom end of the gimbal 3 is snapped into the mounting groove 113 of the handle battery 1.

Specifically, the gimbal 3 includes a control section 31 at the bottom, a three-axis stabilization system 32 fixed at the top of the control section 31, and a camera mounting bracket 33 fixed at the top of the three-axis stabilization system 32. Optionally, in some embodiments, the three-axis stabilization system 32 may not be provided, or the three-axis stabilization system 32 may be replaced with a two-axis stabilization system, or only one rotation axis is arranged that may rotate around the pitch, yaw, or roll direction.

The top of the control section 31 is provided with a mounting hole configured for mounting the three-axis stabilization system 32. The side of the control section 31 is provided with a control button and a control knob 313 configured for controlling the gimbal and/or a camera. Optionally, a display panel may also be set on the side of the control section 31 to display status of one or more of the gimbal, the camera, and a battery cell. The bottom of the control portion 31 is provided with a left convex rib 311a and a right convex rib 311b that cooperate with the left guide groove 113c and the right guide groove 113d of the mounting groove 113 of the handle battery 1. A connection plate 312 is also provided at the bottom of the control portion 31 to contact the contact board 14 installed in the mounting groove 113 of the handle battery 1. The connection plate 312 is provided with a negative contact, a positive contact, and a communication contact that are in contact with the positive contact 141a, the negative contact 141b, and the communication contact 142 provided on the contact board 14. Hence, power required by the control unit 31, the three-axis gimbal stabilization system 32, and/or power required by the camera may be obtained from the handle battery 1, and the control section 31 may communicate with the control circuit board 171 of the handle battery 1. Specifically, the connection plate 312 is disposed between the left convex rib 311a and the right convex rib 311b. It should be understood that when the charging interface and the communication interface provided in the mounting groove 113 of the handle battery 1 are other interfaces (such as a pin-type interface) instead of a contact-type interface type, correspondingly, an interface type matching the interface provided in the mounting groove 113 will be provided at the bottom of the control section 31 of the gimbal 3.

When the gimbal 3 needs to be mounted on the handle battery 1, insert the left convex rib 311a and the right convex rib 311b into the mounting groove 113 from the entrance 113a of the mounting groove 113, and then slide along the left guide groove 113c and right guide groove 113d to the rear end surface 113b to a locking position and lock it to achieve the electrical and communicative connection between the gimbal 3 and the handle battery 1, which is simple and convenient, and easy to operate. Control signals of the control section 31 of the gimbal 3 communicate with the control circuit board 171 of the handle battery 1 through the communication interface at the bottom and the communication interface in the mounting groove of the handle battery 1. For example, the control circuit board 171 in the handle battery 1 may be controlled by the control section 31 of the gimbal 3, or the camera installed on the gimbal 3 or the control section 31 of the gimbal 3 may obtain the power of the battery cell 16 in the handle battery 1 through the communication interface of the handle battery 1.

The three-axis stabilization system 32 may be a three-axis stabilization system of any structure used in the current technology, including a pitch motor that drives a camera to move on the pitch axis, a yaw motor that drives the camera to move on the yaw axis, and a roll motor that drives the camera to move on the roll axis.

The camera mounting bracket 33 may be a bracket of any structure capable of mounting a camera, and is not specifically limited herein. Taking FIGs. 10-12 for example, the camera mounting bracket 33 includes a substantially L-shaped arm fixed to the three-axis stabilization system 32, a camera mount installed on a horizontal portion of the L-shaped arm, and a clamping bracket mounted on a vertical portion of the L-shaped arm. More specifically, a slide rail configured for mounting a camera is provided on the camera mount, and the camera is mounted on the slide rail. Optionally, in some other embodiments, a camera may be directly fixed on the camera mounting bracket 33, instead of being detachably connected to the camera mounting bracket 33.

According to handheld gimbals of embodiments of the present invention, when the power is used up, there is no need to take the whole set away for charging and interrupt shooting. It only needs to remove the current handle battery in use from a gimbal and replace it with a spare handle battery. When a spare handle battery is used, the handle battery just used may be sent for charging and may replace the spare handle battery that is currently in use after charging, so as to achieve the purpose of continuous photographing.

## Claims

1. A handle battery, comprising:
a casing (1211, 1212) including an upper-end opening, a lower-end opening, and a receiving cavity between the upper-end opening and the lower-end opening, the receiving cavity housing a battery cell (16) configured to supply power for a gimbal;
an upper cover (11) covering the upper-end opening, a mounting groove (113) being formed on the upper cover for detachable connection with the gimbal, the mounting groove comprising an entrance (113a) for the gimbal to enter the mounting groove, a first surface opposite to the entrance, a first guide groove and a second guide groove that are opposite to each other and located between the entrance and the first surface, and a bottom surface (113e) below the entrance, the first surface, the first guide groove, and the second guide groove, and a power supply interface (141) being disposed in the mounting groove for supplying power to the gimbal; and
a lower cover (13) covering the lower-end opening.

2. The handle battery according to claim 1, wherein the mounting groove (113) is disposed at a top end (111) of the upper cover (11).

3. The handle battery according to claim 1, wherein the casing includes a first casing (1211) and a second casing (1212) that are snapped together.

4. The handle battery according to claim 3, wherein the first casing (1211) is an arc-shaped plate with a first notch, the second casing (1212) is a rectangular plate with a second notch, smooth transition formed between the first casing and second casing.

5. The handle battery according to any one of claims 1-4, wherein the power supply interface (141) comprises one of a contact interface, a spring pin interface, a slot interface, and a plug-in interface.

6. The handle battery according to claim 5, wherein the power supply interface (141) includes a positive contact (141a) and a negative contact (141b) disposed on the bottom surface (113e) of the mounting groove (113).

7. The handle battery according to claim 6, wherein a contact board (14) is fixed on the bottom surface (113e) of the mounting groove (113), the positive contact (141a) and negative contact (141b) disposed on the contact board.

8. The handle battery according to claim 7, wherein a protection board (15) is fixed on the bottom surface (113e) of the mounting groove (113), and a through hole for receiving the contact board (14) is disposed on the protection board,
or
wherein the contact board (14) protrudes from the bottom surface (113e), a guide slope (114) formed between the contact board and the bottom surface of the mounting groove (113) and extending toward the entrance (113a).

9. The handle battery according to any one of claims 7 or 8, wherein a guide rail (115) is formed on the bottom surface (113e) and protrudes from the bottom surface.

10. The handle battery according to any of claims 1-4, wherein a first locking recess is formed inside the casing (1211, 1212), a control circuit board (171) is disposed at the first locking recess and electrically connected to the battery cell (16), and a communication interface is disposed in the mounting groove (113) configured to connect the control circuit board with the gimbal communicatively.

11. The handle battery according to claim 10, further comprising:
a control button (173); and
a remaining power indicator (172),
wherein the battery cell (16), the control circuit board (171), the control button (173), and the remaining power indicator (172) form a circuit loop.

12. The handle battery according to claim 11, wherein when the control button (173) is pressed, the control circuit board (171) controls the remaining power indicator (172) to light to indicate remaining electrical power of the battery cell (16).

13. The handle battery according to claim 12, wherein the control circuit board (171) controls the remaining power indicator (172) to turn off after the remaining power indicator is lit for a period of time.

14. A handle battery set, comprising:
a handle battery (1) according to one of the preceding claims; and
a charging base (2),
wherein the charging base (2) is configured to be detachably snapped into the mounting groove (113), a surface of the charging base (2) in contact with the power supply interface (141) of the handle battery includes a charging interface, and the charging interface matches the power supply interface for charging the handle battery.

15. A handheld gimbal, comprising:
a handle battery according to one of the claims 1 to 13; and
a base gimbal,
wherein the base gimbal is detachably snapped into the mounting groove (113) of the handle battery.

## Patentansprüche

1. Griffbatterie, die Folgendes umfasst:
ein Gehäuse (1211, 1212), das eine Öffnung an einem oberen Ende, eine Öffnung an einem unteren Ende und einen Aufnahmehohlraum zwischen der Öffnung am oberen Ende und der Öffnung am unteren Ende beinhaltet, wobei im Aufnahmehohlraum eine Batteriezelle (16) untergebracht ist, die dazu ausgelegt ist, eine Kardanaufhängung mit Strom zu versorgen;
eine obere Abdeckung (11), die die Öffnung am oberen Ende abdeckt, wobei auf der oberen Abdeckung zur lösbaren Verbindung mit der Kardanaufhängung eine Montagenut (113) gebildet ist, wobei die Montagenut eine Einführung (113a) zum Einführen der Kardanaufhängung in die Montagenut, eine erste Fläche gegenüber der Einführung, eine erste Führungsnut und eine zweite Führungsnut, die einander gegenüberliegen und sich zwischen der Einführung und der ersten Fläche befinden, und eine Bodenfläche (113e) unter der Einführung umfasst, wobei in der Montagenut die erste Fläche, die erste Führungsnut und die zweite Führungsnut und eine Stromversorgungsschnittstelle (141) zum Versorgen der Kardanaufhängung mit Strom angeordnet sind; und
eine untere Abdeckung (13), die die Öffnung am unteren Ende abdeckt.

2. Griffbatterie nach Anspruch 1, wobei die Montagenut (113) an einem oberen Ende (111) der oberen Abdeckung (11) angeordnet ist.

3. Griffbatterie nach Anspruch 1, wobei das Gehäuse ein erstes Gehäuse (1211) und ein zweites Gehäuse (1212) beinhaltet, die miteinander verrastet sind.

4. Griffbatterie nach Anspruch 3, wobei das erste Gehäuse (1211) eine bogenförmige Platte mit einer ersten Kerbe ist, das zweite Gehäuse (1212) eine rechteckige Platte mit einer zweiten Kerbe ist, wobei zwischen dem ersten Gehäuse und dem zweiten Gehäuse ein glatter Übergang gebildet ist.

5. Griffbatterie nach einem der Ansprüche 1-4, wobei die Stromversorgungsschnittstelle (141) eines von einer Kontaktschnittstelle, einer Federstiftschnittstelle, einer Schlitzschnittstelle und einer Einsteckschnittstelle umfasst.

6. Griffbatterie nach Anspruch 5, wobei die Stromversorgungsschnittstelle (141) einen positiven Kontakt (141a) und einen negativen Kontakt (141b) beinhaltet, die auf der Bodenfläche (113e) der Montagenut (113) angeordnet sind.

7. Griffbatterie nach Anspruch 6, wobei auf der Bodenfläche (113e) der Montagenut (113) eine Kontaktplatine (14) befestigt ist, wobei der positive Kontakt (141a) und der negative Kontakt (141b) auf der Kontaktplatine angeordnet sind.

8. Griffbatterie nach Anspruch 7, wobei auf der Bodenfläche (113e) der Montagenut (113) eine Schutzplatine (15) befestigt ist und auf der Schutzplatine ein Durchgangsloch zur Aufnahme der Kontaktplatine (14) angeordnet ist,
oder
wobei die Kontaktplatine (14) von der Bodenfläche (113e) vorsteht, wobei zwischen der Kontaktplatine und der Bodenfläche der Montagenut (113) eine Führungsschräge (114) gebildet ist und sich zur Einführung (113a) erstreckt.

9. Griffbatterie nach einem der Ansprüche 7 oder 8, wobei eine Führungsschiene (115) auf der Bodenfläche (113e) gebildet ist und von der Bodenfläche vorsteht.

10. Griffbatterie nach einem der Ansprüche 1-4, wobei im Gehäuse (1211, 1212) eine erste Verriegelungsausnehmung gebildet ist, eine Steuerschaltungsplatine (171) an der ersten Verriegelungsausnehmung angeordnet und mit der Batteriezelle (16) elektrisch verbunden ist und eine Kommunikationsschnittstelle in der Montagenut (113) angeordnet und dazu ausgelegt ist, die Steuerschaltungsplatine mit der Kardanaufhängung kommunikativ zu verbinden.

11. Griffbatterie nach Anspruch 10, die ferner Folgendes umfasst:
eine Steuertaste (173); und
eine Reststromanzeige (172),
wobei die Batteriezelle (16), die Steuerschaltungsplatine (171), die Steuertaste (173) und die Reststromanzeige (172) eine Schaltungsschleife bilden.

12. Griffbatterie nach Anspruch 11, wobei, wenn die Steuertaste (173) gedrückt wird, die Steuerschaltungsplatine (171) die Reststromanzeige (172) zum Leuchten steuert, um einen verbleibenden elektrischen Strom der Batteriezelle (16) anzuzeigen.

13. Griffbatterie nach Anspruch 12, wobei die Steuerschaltungsplatine (171) die Reststromanzeige (172) zum Ausschalten steuert, wenn die Reststromanzeige für eine Zeitperiode geleuchtet hat.

14. Griffbatteriesatz, der Folgendes umfasst:
eine Griffbatterie (1) nach einem der vorhergehenden Ansprüche; und
eine Ladebasis (2),
wobei die Ladebasis (2) dazu ausgelegt ist, lösbar in die Montagenut (113) eingerastet zu sein, eine Fläche der Ladebasis (2), die mit der Stromversorgungsschnittstelle (141) der Griffbatterie in Kontakt ist, eine Ladeschnittstelle beinhaltet und die Ladeschnittstelle an die Stromversorgungsschnittstelle zum Laden der Griffbatterie angeglichen ist.

15. Tragbare Kardanaufhängung, die Folgendes umfasst:
eine Griffbatterie nach einem der Ansprüche 1 bis 13; und
eine Basiskardanaufhängung,
wobei die Basiskardanaufhängung lösbar in die Montagenut (113) der Griffbatterie eingerastet ist.

## Revendications

1. Batterie de poignée comprenant :
un boîtier (1211, 1212) comprenant une ouverture d'extrémité supérieure, une ouverture d'extrémité inférieure, et une cavité de réception entre l'ouverture d'extrémité supérieure et l'ouverture d'extrémité inférieure, la cavité de réception logeant un élément de batterie (16) configuré pour fournir de l'énergie à une suspension à cardan ;
un couvercle supérieur (11) recouvrant l'ouverture d'extrémité supérieure, une rainure de montage (113) étant formée sur le couvercle supérieur pour le raccordement détachable avec la suspension à cardan, la rainure de montage comprenant une entrée (113a) pour que la suspension cardan entre dans la rainure de montage, une première surface opposée à l'entrée, une première rainure de guidage et une seconde rainure de guidage qui sont opposées entre elles et positionnées entre l'entrée et la première surface, et une surface inférieure (113e) au-dessous de l'entrée, de la première surface, de la première rainure de guidage et de la seconde rainure de guidage, et une interface d'alimentation en énergie (141) étant disposée dans la rainure de montage pour fournir de l'énergie à la suspension à cardan ; et
un couvercle inférieur (13) recouvrant l'ouverture d'extrémité inférieure.

2. Batterie de poignée selon la revendication 1, dans laquelle la rainure de montage (113) est disposée au niveau d'une extrémité supérieure (111) du couvercle supérieur (11).

3. Batterie de poignée selon la revendication 1, dans laquelle le boîtier comprend un premier boîtier (1211) et un second boîtier (1212) qui sont encliquetés ensemble.

4. Batterie de poignée selon la revendication 3, dans laquelle le premier boîtier (1211) est une plaque en forme d'arc avec une première encoche, le second boîtier (1212) est une plaque rectangulaire avec une seconde encoche, une transition douce étant formée entre le premier boîtier et le second boîtier.

5. Batterie de poignée selon l'une quelconque des revendications 1 à 4, dans laquelle l'interface d'alimentation en énergie (141) comprend l'une parmi une interface de contact, une interface de goupille-ressort, une interface de fente et une interface de raccordement.

6. Batterie de poignée selon la revendication 5, dans laquelle l'interface d'alimentation en énergie (141) comprend un contact positif (141a) et un contact négatif (141b) disposés sur la surface inférieure (113e) de la rainure de montage (113).

7. Batterie de poignée selon la revendication 6, dans laquelle une carte de contact (14) est fixée sur la surface inférieure (113e) de la rainure de montage (113), le contact positif (141a) et le contact négatif (141b) étant disposés sur la carte de contact.

8. Batterie de poignée selon la revendication 7, dans laquelle une carte de protection (15) est fixée sur la surface inférieure (113e) de la rainure de montage (113), et un trou débouchant pour recevoir la carte de contact (14) est disposé sur la carte de protection,
ou bien
dans laquelle la carte de contact (14) fait saillie de la surface inférieure (113e), une inclinaison de guidage (114) formée entre la carte de contact et la surface inférieure de la rainure de montage (113) et s'étendant vers l'entrée (113a).

9. Batterie de poignée selon l'une quelconque des revendications 7 ou 8, dans laquelle un rail de guidage (115) est formé sur la surface inférieure (113e) et fait saillie de la surface inférieure.

10. Batterie de poignée selon l'une quelconque des revendications 1 à 4, dans laquelle un premier évidement de verrouillage est formé à l'intérieur du boîtier (1211, 1212), une carte de circuit de commande (171) est disposée au niveau du premier évidement de verrouillage et électriquement raccordée à l'élément de batterie (16), et une interface de communication est disposée dans la rainure de montage (113) configurée pour raccorder la carte de circuit de commande avec la suspension à cardan, par communication.

11. Batterie de poignée selon la revendication 10, comprenant en outre :
un bouton de commande (173) ; et
un indicateur de puissance résiduelle (172),
dans laquelle l'élément de batterie (16), la carte de circuit de commande (171), le bouton de commande (173) et l'indicateur de puissance résiduelle (172) forment une boucle de circuit.

12. Batterie de poignée selon la revendication 11, dans laquelle lorsque le bouton de commande (173) est enfoncé, la carte de circuit de commande (171) commande l'indicateur de puissance résiduelle (172) pour qu'il s'allume afin d'indiquer la puissance électrique résiduelle de l'élément de batterie (16).

13. Batterie de poignée selon la revendication 12, dans laquelle la carte de circuit de commande (171) commande l'indicateur de puissance résiduelle (172) pour qu'il s'arrête, après que l'indicateur de puissance résiduelle s'est éclairé pendant une certaine période de temps.

14. Ensemble de batterie de poignée comprenant :
une batterie de poignée (1) selon l'une des revendications précédentes ; et
une base de charge (2),
dans lequel la base de charge (2) est configurée pour être encliquetée, de manière détachable, dans la rainure de montage (113), une surface de la base de charge (2) en contact avec l'interface d'alimentation en énergie (141) de la batterie de poignée comprend une interface de charge, et l'interface de charge correspond à l'interface d'alimentation en énergie pour charger la batterie de poignée.

15. Suspension à cardan portative comprenant :
une batterie de poignée selon l'une des revendications 1 à 13 ; et
une suspension à cardan de base,
dans laquelle la suspension à cardan de base est encliquetée, de manière détachable, dans la rainure de montage (113) de la batterie de poignée.
